# EUROPEAN PATENT SPECIFICATION

(11) **EP 4 057 690 B1**
(45) Date of publication and mention of the grant of the patent: **13.08.2025**
(21) Application number: 20884340.9
(22) Date of filing: 06.11.2020
(51) Int. Cl.: H04W 36/30, H04W 36/36, H04W 36/00

(54) **HANDOVER METHOD, CONFIGURATION METHOD, TERMINAL, AND NETWORK DEVICE**
ÜBERGABEVERFAHREN, KONFIGURATIONSVERFAHREN, ENDGERÄT UND NETZWERKVORRICHTUNG
PROCÉDÉ DE TRANSFERT INTERCELLULAIRE, PROCÉDÉ DE CONFIGURATION, TERMINAL ET DISPOSITIF DE RÉSEAU

(30) Priority: 07.11.2019 CN 201911083762
(43) Date of publication of application: 14.09.2022
(73) Proprietor: Vivo Mobile Communication Co., Ltd., Dongguan, Guangdong 523863 (CN)
(72) Inventor: CHEN, Li, Dongguan, Guangdong 523863 (CN)
(74) Representative: Raffay & Fleck
(86) International application number: PCT/CN2020/127039
(87) International publication number: WO 2021/088968

(56) References cited:
- EP-A1- 3 771 250
- WO-A1-2018/175721
- WO-A1-2019/179316
- CN-A- 107 889 145
- CN-A- 110 290 541
- ERICSSON: "Conditional Handover in NR", vol. RAN WG2, no. Athens, Greece; 20190225 - 20190301, 14 February 2019 (2019-02-14), XP051601798, Retrieved from the Internet <URL:http://www.3gpp.org/ftp/tsg%5Fran/WG2%5FRL2/TSGR2%5F105/Docs/R2%2D1900404%2Ezip> [retrieved on 20190214]
- ERICSSON: "Configuration of Conditional handover in NR", vol. RAN WG2, no. Prague, Czech Republic; 20190826 - 20190830, 15 August 2019 (2019-08-15), XP051767132, Retrieved from the Internet <URL:http://www.3gpp.org/ftp/tsg_ran/WG2_RL2/TSGR2_107/Docs/R2-1909330.zip> [retrieved on 20190815]
- ERICSSON: "Triggering of Conditional Handover in NR", vol. RAN WG2, no. Athens, Greece; 20190225 - 20190301, 14 February 2019 (2019-02-14), XP051601799, Retrieved from the Internet <URL:http://www.3gpp.org/ftp/tsg%5Fran/WG2%5FRL2/TSGR2%5F105/Docs/R2%2D1900405%2Ezip> [retrieved on 20190214]
- VIVO: "Remaining issues for cell level triggers for conditional handover", vol. RAN WG2, no. Prague, Czech Republic; 20190826 - 20190830, 16 August 2019 (2019-08-16), XP051767337, Retrieved from the Internet <URL:http://www.3gpp.org/ftp/tsg_ran/WG2_RL2/TSGR2_107/Docs/R2-1909542.zip> [retrieved on 20190816]
- OPPO (RAPPORTEUR): "Summary of [106#42] [NR/LTE/mob enh] CHO configuration", 3GPP DRAFT; R2-1911733 - SUMMARY OF 106#42 CHO CONFIGURATION(OPPO)_V1.1, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, 30 August 2019 (2019-08-30), Prague, Czech Republic, XP051769406
- VIVO: "Conditional Handover without Explicit Trigger Condition", 3GPP DRAFT; R2-1912339_CONDITIONAL HANDOVER WITHOUT EXPLICIT TRIGGER CONDITION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, 4 October 2019 (2019-10-04), Chongqing, China, XP051790386

## Description

### TECHNICAL FIELD

The present disclosure relates to the field of communications technologies, and in particular, to a handover method, a configuration method, a terminal, and a network device.

### BACKGROUND

In the existing conditional handover (Conditional Handover, CHO) procedure, a trigger event is configured by a source node. After being determined by a target node, configuration of candidate cells is transmitted to a terminal transparently through the source node. The terminal measures all candidate cells, and according to a handover command configured by the network and the trigger event, selects a target cell from the candidate cells for performing handover, in a case that a corresponding trigger condition is met. However, a success rate of the existing conditional handover is low.

Document ERICSSON: "Conditional Handover in NR", 3GPP DRAFT; R2-1900404, vol. RAN WG2, no. Athens, Greece; 14 February 2019, is a 3GPP paper, discussing general principles and concepts of CHO in 5G like CHO call flow, trigger configurations, involved entities, used RRC messages etc.

Document ERICSSON: "Configuration of Conditional handover in NR", 3GPP DRAFT; R2-1909330, vol. RAN WG2, no. Prague, Czech Republic; 15 August 2019, is another 3GPP contribution discussing follow ups for CHO issues that seemed to converge during a previous email discussion, thereby addressing inter-alia the encoding of CHO configurations in RRC messages (ASN1) as concrete proposals for TP 38.331.

Document ERICSSON: "Triggering of Conditional Handover in NR", 3GPP DRAFT; R2-1900405, vol. RAN WG2, no. Athens, Greece; 20190225 - 20190301 14 February 2019, is another 3GPP contribution discussing configuration of the triggering condition to be monitored for conditional handover thereby proposing inter-alia the basis of triggering conditions (A3, A5, measured parameters RSRP, RSRQ, resources to be measured, SSB, CSI-RS).

### SUMMARY

All embodiments of the present disclosure provide a conditional handover method, a configuration method, a terminal and a network device, to resolve a problem of low success rate of the existing handover manner.

The present invention defines conditional handover method performed by a terminal according to independent claim 1, a corresponding conditional handover configuration method performed by the inter-related network device according to independent claim 6, a corresponding terminal according to independent claim 11, and a corresponding network device according to independent claim 12. Preferred embodiments are defined in the dependent claims.

### BRIEF DESCRIPTION OF DRAWINGS

To describe the technical solutions in the embodiments of the present disclosure more clearly, the following briefly describes the accompanying drawings required for describing the embodiments of the present disclosure. Apparently, the accompanying drawings in the following description show merely some embodiments of the present disclosure, and a person of ordinary skill in the art may still derive other drawings from these accompanying drawings without creative efforts.
FIG. 1 is a flowchart of a handover method according to an embodiment of the present disclosure;
FIG. 2 is a flowchart of a configuration method according to an embodiment of the present disclosure;
FIG. 3 is a first schematic structural diagram of a terminal according to an embodiment of the present disclosure;
FIG. 4 is a first schematic structural diagram of a network device according to an embodiment of the present disclosure;
FIG. 5 is a second schematic structural diagram of a terminal according to an embodiment of the present disclosure; and
FIG. 6 is a second schematic structural diagram of a network device according to an embodiment of the present disclosure.

### DETAILED DESCRIPTION OF EMBODIMENTS

To describe the technical solutions in the embodiments of the present disclosure more clearly, the following briefly describes the accompanying drawings required for describing the embodiments of the present disclosure. Apparently, the accompanying drawings in the following description show merely some embodiments of the present disclosure, and a person of ordinary skill in the art may still derive other drawings from these accompanying drawings without creative efforts.

The technologies described herein are not limited to long term evolution (Long Term Evolution, LTE)/LTE-Advanced (LTE-Advanced, LTE-A) systems, and may also be used in various wireless communications systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" are often used interchangeably. The CDMA system can implement radio technologies such as CDMA2000 and universal terrestrial radio access (Universal Terrestrial Radio Access, UTRA). UTRA includes wideband CDMA (Wideband Code Division Multiple Access, WCDMA) and other CDMA variants. The TDMA system can implement radio technologies such as global system for mobile communications (Global System for Mobile Communication, GSM). The OFDMA system may implement radio technologies such as ultra mobile broadband (Ultra Mobile Broadband, UMB), evolved UTRA (Evolution-UTRA, E-UTRA), IEEE 802.11 (Wi-Fi), IEEE 802.16 (WiMAX), IEEE 802.20, and Flash-OFDM. UTRA and E-UTRA are part of the universal mobile telecommunications system (Universal Mobile Telecommunications System, UMTS). LTE and more advanced LTEs (such as LTE-A) are new releases of UMTS that use E-UTRA. UTRA, E-UTRA, UMTS, LTE, LTE-A, and GSM are described in documents from an organization named "3rd Generation Partnership Project" (3rd Generation Partnership Project, 3GPP). CDMA2000 and UMB are described in documents from an organization named "3rd Generation Partnership Project 2" (3GPP2). The technologies described herein are applicable not only to the above-mentioned systems and radio technologies, but also to other systems and radio technologies such as a new radio (New Radio, NR) system.

A wireless communications system in the embodiments of the present disclosure includes a terminal and a network device. The terminal may also be referred to as a terminal device or user equipment (User Equipment, UE). The terminal may be a terminal side device such as a mobile phone, a tablet computer (Tablet Personal Computer), a laptop computer (Laptop Computer), a personal digital assistant (Personal Digital Assistant, PDA), a mobile Internet device (Mobile Internet Device, MID), a wearable device (Wearable Device), or an in-vehicle device. It should be noted that the specific type of the terminal is not limited in the embodiments of the present disclosure. The network device may be a base station or a core network. The base station may be a 5G base station or a base station of a later release (for example, a gNB or a 5G NR NB), or a base stations in other communications systems (for example, an eNB, a WLAN access point, or other access points). The base station may be referred to as a NodeB, an evolved NodeB, an access point, a base transceiver station (Base Transceiver Station, BTS), a radio base station, a radio transceiver, a basic service set (Basic Service Set, BSS), an extended service set (Extended Service Set, ESS), a NodeB, an evolved NodeB (eNB), a home NodeB, a home evolved NodeB, a WLAN access point, a Wi-Fi node, or other applicable terms in the art. As long as a same technical effect is achieved, the base station is not limited to any specific technical term.

In this embodiment of the present disclosure, optionally, a dual connectivity (Dual Connectivity, DC) architecture may be used for a terminal, and the DC architecture includes two cell groups: a master cell group (Master Cell Group, MCG) and a secondary cell group (Secondary Cell Group, SCG). The MCG corresponds to a network-side master node (Master Node, MN), and the SCG corresponds to a network-side secondary node (secondary node, SN). The MCG includes a primary cell (Primary Cell, PCell) and a secondary cell (Secondary Cell, SCell). The SCG includes a primary secondary cell (Primary Secondary Cell, PSCell) and a SCell. Both the PCell and the PSCell may also be referred to as special cells (Special Cell, SpCell).

Optionally, the terminal may use carrier aggregation (Carrier Aggregation, CA) technology. With the CA technology, a cell corresponding to the terminal may be divided into a primary cell (PCell) and a secondary cell (SCell).

The present disclosure is described below with reference to the embodiments and the accompanying drawings.

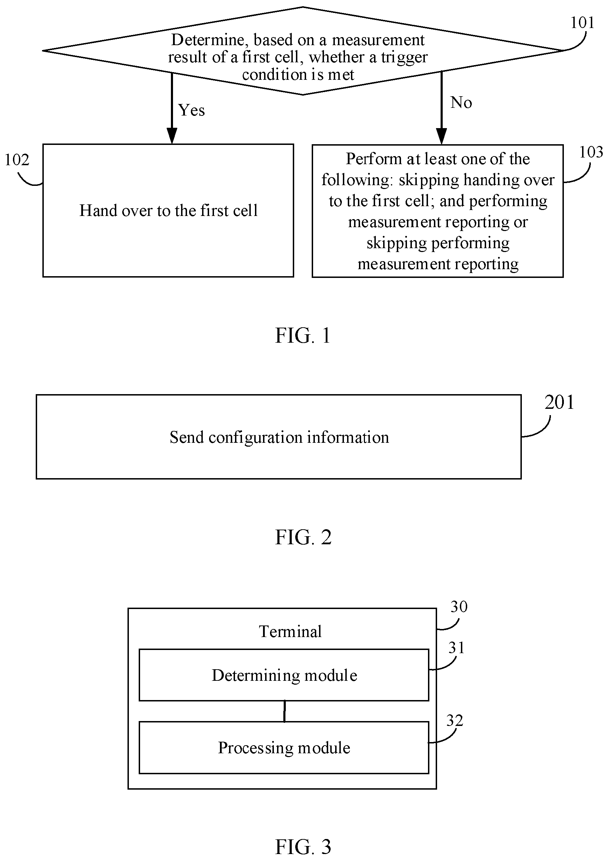

Referring to FIG. 1, FIG. 1 is a flowchart of a handover method according to an embodiment of the present disclosure. The method is applied to a terminal. As shown in FIG. 1, the method includes the following steps.

Step 101: Determine, based on a measurement result of a first cell, whether a trigger condition is met.

If it is determined that the trigger condition is met, step 102 is performed. If the trigger condition is not met, step 103 is performed.

Optionally, the first cell may be a candidate cell. Alternatively, the first cell is associated with the trigger condition. It should be noted that in a case that the first cell is associated with the trigger condition, the first cell may be a candidate cell, or may not be a candidate cell, but is only a neighboring cell associated with the trigger condition.

In addition, because the trigger condition may be related to a servicing cell, for example, the trigger condition is that the trigger condition is met only when the first cell has a power higher than that of the servicing cell by specified decibels. Therefore, when step 101 is being performed, whether the trigger condition is met may be alternatively determined based on the measurement result of the first cell and a measurement result of the servicing cell.

The measurement result in step 101 may include but is not limited to at least one of the following: reference signal receiving power (Reference Signal Receiving Power, RSRP), reference signal received quality (Reference Signal Received Quality, RSRQ), a signal to interference plus noise ratio (Signal to Interference plus Noise Ratio, SINR), or a channel quality indicator (Channel Quality Indicator, CQI). Measurement corresponding to the measurement result may include cell measurement, and/or beam measurement. The beam measurement may include measurement of at least one of the following: a synchronization signal and PBCH block (Synchronization Signal and PBCH block, SSB), a demodulation reference signal (Demodulation Reference Signal, DMRS), or other reference signals.

Step 102: Hand over to the first cell.

Optionally, if the trigger condition is met, the terminal may hand over to the first cell, and may further skip performing measurement reporting, thereby saving resources and reducing signaling overheads.

In addition, if it is determined that the trigger condition is met in step 101, but a corresponding condition handover is not configured, the terminal may perform the measurement reporting.

Step 103: Perform at least one of the following: skipping handing over to the first cell; or performing measurement reporting or skipping performing measurement reporting.

It should be noted that in a case that the first cell is a candidate cell, if the trigger condition is not met, the terminal performs the measurement reporting, so that the network device can obtain the network status. In a case that the first cell is associated with the trigger condition, if the trigger condition is not met, the terminal skips performing the measurement reporting, to save resources and reduce signaling overheads.

The handover method in this embodiment of the present disclosure can detect, based on the measurement result of the first cell, whether the trigger condition is met, and hand over to the first cell in a case that the trigger condition is met. In this way, the success rate of the handover can be increased, to ensure a high success rate of the handover and low latency.

In this embodiment of the present disclosure, the trigger condition may be associated with a plurality of cells. Alternatively, in a case that the first cell is associated with the trigger condition, the first cell may be a primary cell (PCell) associated with the trigger condition. It can be understood that in this case, the terminal may use the CA technology.

Alternatively, in a case that the first cell is associated with the trigger condition, the first cell may be a special cell (SpCell) associated with the trigger condition. It can be understood that in this case, the terminal may use a DC architecture.

In this way, the success rate of the handover can be increased by selecting a PCell or SpCell to trigger the handover.

In this embodiment of the present disclosure, to ensure the handover process (such as a conditional handover process), the terminal may receive handover-related configuration information from a network device (such as a source base station). The handover-related configuration information may include but is not limited to at least one of the following:
(a) a radio resource control (Radio Resource Control, RRC) reconfiguration message, an RRC synchronization reconfiguration message(ReconfigurationWithSync), a handover command (HO command), or mobility control information (Mobility Control Info);
(b) a trigger event, for example, a conditional handover trigger event;
(c) measurement configuration information, for example, a measurement object (measurement object);
(d) measurement reporting configuration information, for example, a measurement report (measurement report);
(e) a candidate cell identifier corresponding to the handover, where, for example, the identifier may include at least one of the following: a frequency identifier, an absolute radio frequency channel number (Absolute Radio Frequency Channel Number, ARFCN), a cell index (Cell Index), or a physical cell identifier (Physical Cell Identifier, PCI); or
(f) random access channel (Random Access Channel, RACH) configuration information corresponding to the candidate cell.

In all embodiments of the present invention, the terminal may receive configuration information from the network device before performing step 101. For example, the network device is a source base station. The configuration information may include at least one of the following:
(1) a trigger event;
(2) a trigger event index; or
(3) that a trigger event or a trigger event index (index) is associated with a candidate cell.

Alternatively, the association involved in (3) may be: that the trigger event is associated with the candidate cell, or that the trigger event index is associated with the candidate cell.

In an embodiment, the configured trigger event or trigger event index is associated with one candidate cell.

Optionally, the candidate cell is the same as a PCell or Spcell indicated by a first message. The first message may be any one of the following: an RRC reconfiguration message, an RRC synchronization reconfiguration message, a handover command, mobile control information, or the like.

In an embodiment, the candidate cell is the same as a PCell or SpCell indicated by the RRC reconfiguration message.

It should be noted that, that a trigger event is associated with a candidate cell may include any one of the following association manners: 1) the trigger event being in one-to-one correspondence to the candidate cell, for example, the trigger event being in one-to-one correspondence to the candidate cell through configuration; 2) in an RRC message configured with the trigger event, an information element (Information Element, IE) corresponding to the candidate cell identifier being configured; and 3) in an RRC message configured with the candidate cell, an IE of the RRC message corresponding to the trigger event being configured.

That a trigger event index is associated with a candidate cell may include any of the following association manners: 1) the trigger event index being in one-to-one correspondence to the candidate cell, for example, the trigger event index being in one-to-one correspondence to the candidate cell through configuration; 2) in an RRC message configured with the trigger event index, an IE corresponding to the candidate cell identifier being configured; and 3) in an RRC message configured with the candidate cell, an IE corresponding to the trigger event index being configured.

(4) that a trigger event or a trigger event index (index) is associated with a candidate cell identifier.

Alternatively, the association involved in (4) may be: the trigger event being associated with the candidate cell identifier, or the trigger event index being associated with the candidate cell identifier;
In an embodiment, the configured trigger event or trigger event index is associated with one candidate cell identifier.

Optionally, the candidate cell identifier may be the same as a PCell identifier or SpCell identifier in a first message. The first message may be any one of the following: an RRC reconfiguration message, an RRC synchronization reconfiguration message, a handover command, mobile control information, or the like.

In an embodiment, the candidate cell identifier is the same as a PCell identifier or SpCell identifier in the RRC reconfiguration message.

It should be noted that, that the trigger event is associated with the candidate cell identifier may include any one of the following association manners: 1) the trigger event being in one-to-one correspondence to the candidate cell identifier, for example, the trigger event being in one-to-one correspondence to the candidate cell identifier through configuration; 2) in an RRC message configured with the trigger event, an IE corresponding to the candidate cell identifier being configured; and 3) in an RRC message corresponding to the configured candidate cell identifier, an IE of the RRC message corresponding to the trigger event being configured.

The trigger event index being associated with the candidate cell identifier may include any one of the following association manners: 1) the trigger event index being in one-to-one correspondence to the candidate cell identifier, for example, the trigger event index being in one-to-one correspondence to the candidate cell identifier through configuration; 2) in an RRC message configured with the trigger event index, an IE corresponding to the candidate cell identifier being configured; and 3) in an RRC message configured with the candidate cell identifier, an IE corresponding to the trigger event index being configured.

(5) that a trigger event is associated with a first message.

In an embodiment, the configured trigger event is associated with one first message.

Optionally, the first message in (5) may be any one of the following: an RRC reconfiguration message, an RRC synchronization reconfiguration message, a handover command, mobile control information, or the like.

Optionally, that a trigger event is associated with a first message may include any one of the following:
a trigger event index being associated with a first-message index;
a trigger event index being associated with the first message; and
the trigger event being associated with a first-message index.

For example, assuming that the first message is an RRC reconfiguration message, the association relationship involved in (5) may include any one of the following: 1) the trigger event index being associated with one RRC reconfiguration message index; 2) the trigger event index being associated with one RRC reconfiguration message; and 3) the trigger event being associated with one RRC reconfiguration message index.

It should be noted that a trigger event index being associated with a first-message index may include any one of the following association manners: 1) the trigger event being in one-to-one correspondence to the first message, for example, the trigger event being in one-to-one correspondence to the first message through configuration; 2) in an RRC message configured with the trigger event, an IE of the first message being configured; and 3) in the first message, an IE of the RRC message corresponding to the trigger event being configured.

(6) that a trigger event is associated with a PCell identifier or SpCell identifier in a first message.

It should be understood that the association involved in (6) may be any one of the following: 1) the trigger event index being associated with the PCell identifier or SpCell identifier in the first message; 2) the trigger event index being associated with the PCell or SpCell indicated by the first message; and 3) the trigger event being associated with the PCell identifier or SpCell identifier in the first message.

Optionally, the first message in (6) may be any one of the following: an RRC reconfiguration message, an RRC synchronization reconfiguration message, a handover command, mobile control information, or the like.

It should be noted that the trigger event index being associated with the PCell identifier or SpCell identifier in the first message may include any one of the following association manners: 1) the trigger event index being in one-to-one correspondence to the PCell identifier or SpCell identifier in the first message, for example, the trigger event index being in one-to-one correspondence to the PCell identifier the first message through configuration; 2) in an RRC message configured with the trigger event, an IE of the first message being configured; and 3) in the first message, an IE corresponding to the trigger event index being configured.

The trigger event index being associated with the PCell or SpCell indicated by the first message may include any one of the following association manners: 1) the trigger event index being in one-to-one correspondence to the PCell or SpCell indicated by the first message, for example, the trigger event index being in one-to-one correspondence to the PCell or SpCell indicated by the first message through configuration; 2) in an RRC message configured with the trigger event index, an IE of the first message being configured; and 3) in the first message, an IE corresponding to the trigger event index being configured.

The trigger event being associated with the PCell identifier or SpCell identifier in the first message may include any one of the following association manners: 1) the trigger event being in one-to-one correspondence to the PCell identifier or SpCell identifier in the first message, for example, the trigger event being in one-to-one correspondence to the PCell identifier or SpCell identifier in the first message through configuration; 2) in an RRC message configured with the trigger event, an IE of the first message being configured; and 3) in the first message, an IE of the RRC message corresponding to the trigger event being configured.

It is to be noted, that the association manner in all embodiments of the present invention comprises the candidate cell being in one-to-one correspondence to the trigger condition, wherein the candidate cell is a primary cell, PCell, associated with the trigger condition; or the first cell is a special cell, SpCell, associated with the trigger condition.

In addition, it should be noted that the trigger event in this embodiment of the present disclosure may be an existing trigger event or a newly defined trigger event. For example, when the trigger event is an existing trigger event, it may be event A1, event A2, event A3, event A4, event A5, event B1, event B2, event B3, event B4, event B5, event C1, event C2, event C3, or the like. Event A1 is that a cell measurement result of a serving cell is better than a first absolute threshold. Event A2 is that the cell measurement result of the serving cell is worse than a second absolute threshold. Event A3 is that a cell measurement result of a potential target cell is better than that of the serving cell. Event A4 is that the cell measurement result of the potential target cell is better than a third absolute threshold. Event A5 is that the cell measurement result of the serving cell is worse than a fourth absolute threshold, and that the cell measurement result of the potential target cell is better than a fifth absolute threshold.

Referring to FIG. 2, FIG. 2 is a flowchart of a configuration method according to an embodiment of the present disclosure. The method is applied to a network device. As shown in FIG. 2, the method includes the following step.

Step 201: Send configuration information.

The configuration information may include at least one of the following:
a trigger event;
a trigger event index;
that a trigger event or a trigger event index is associated with a candidate cell;
that a trigger event or a trigger event index is associated with a candidate cell identifier;
that a trigger event is associated with a first message; or
that a trigger event is associated with a PCell identifier or SpCell identifier in a first message.

Optionally, the candidate cell is the same as a PCell or Spcell indicated by the first message;
or
the candidate cell identifier is the same as the PCell identifier or SpCell identifier in the first message.

Optionally, that a trigger event is associated with a first message includes any one of the following:
a trigger event index being associated with a first-message index;
a trigger event index being associated with the first message; and
the trigger event being associated with a first-message index; or
that a trigger event is associated with a PCell identifier or SpCell identifier in a first message includes any one of the following:
   a trigger event index being associated with the PCell identifier or SpCell identifier in the first message;
   a trigger event index being associated with a PCell or SpCell indicated by the first message; and
   the trigger event being associated with the PCell identifier or SpCell identifier in the first message.

Optionally, that a trigger event is associated with a first message includes any one of the following association manners:
the trigger event being in one-to-one correspondence to the first message;
an RRC message corresponding to the trigger event being configured with an IE of the first message; and
the first message being configured with an IE of an RRC message corresponding to the trigger event.

Optionally, the first message includes any one of the following:
an RRC reconfiguration message, an RRC synchronization reconfiguration message, a handover command, and mobile control information.

It can be understood that the content of the configuration information in this embodiment may be the same as that described in the embodiment shown in FIG. 1. Details are not described herein.

With the foregoing configuration information, the success rate of the handover performed by the terminal can be increased, thereby ensuring a high success rate of the handover and low latency.

The foregoing embodiments describe the handover method and the configuration method in the present disclosure. The following describes the terminal and network device in the present disclosure with reference to the embodiments and the accompanying drawings.

Referring to FIG. 3, FIG. 3 is a schematic structural diagram of a terminal according to an embodiment of the present disclosure. As shown in FIG. 3, the terminal 30 includes:
a determining module 31, configured to determine, based on a measurement result of a first cell, whether a trigger condition is met; and
a processing module 32, configured to hand over to the first cell in a case that the trigger condition is met.

Optionally, the first cell is a candidate cell; or
the first cell is associated with the trigger condition.

Optionally, in a case that the first cell is associated with the trigger condition,
the first cell is a primary cell (PCell) associated with the trigger condition; or
the first cell is a special cell (SpCell) associated with the trigger condition.

Optionally, the processing module 32 is further configured to: in a case that the trigger condition is met, skip performing measurement reporting.

Optionally, the processing module 32 is further configured to:
in a case that the trigger condition is not met, perform at least one of the following:
skipping handing over to the first cell; or
performing measurement reporting, or skipping performing measurement reporting.

Optionally, the terminal 30 further includes:
a receiving module, configured to receive configuration information; where
the configuration information includes at least one of the following:
   a trigger event;
   a trigger event index;
   that a trigger event or a trigger event index is associated with a candidate cell;
   that a trigger event or a trigger event index is associated with a candidate cell identifier;
   that a trigger event is associated with a first message; or
   that a trigger event is associated with a PCell identifier or SpCell identifier in a first message.

Optionally, the candidate cell is the same as a PCell or Spcell indicated by the first message;
or
the candidate cell identifier is the same as the PCell identifier or SpCell identifier in the first message.

Optionally, that a trigger event is associated with a first message includes any one of the following:
a trigger event index being associated with a first-message index;
a trigger event index being associated with the first message; and
the trigger event being associated with a first-message index; or
that a trigger event is associated with a PCell identifier or SpCell identifier in a first message includes any one of the following:
   a trigger event index being associated with the PCell identifier or SpCell identifier in the first message;
   a trigger event index being associated with a PCell or SpCell indicated by the first message; and
   the trigger event being associated with the PCell identifier or SpCell identifier in the first message.

Optionally, that a trigger event is associated with a first message includes any one of the following association manners:
the trigger event being in one-to-one correspondence to the first message;
an RRC message corresponding to the trigger event being configured with an IE of the first message; and
the first message being configured with an IE of an RRC message corresponding to the trigger event.

Optionally, the first message includes any one of the following:
an RRC reconfiguration message, an RRC synchronization reconfiguration message, a handover command, and mobile control information.

The terminal 30 in this embodiment of the present disclosure can implement the processes of the method embodiment in FIG. 1, with the same beneficial effects achieved. To avoid repetition, details are not described herein again.

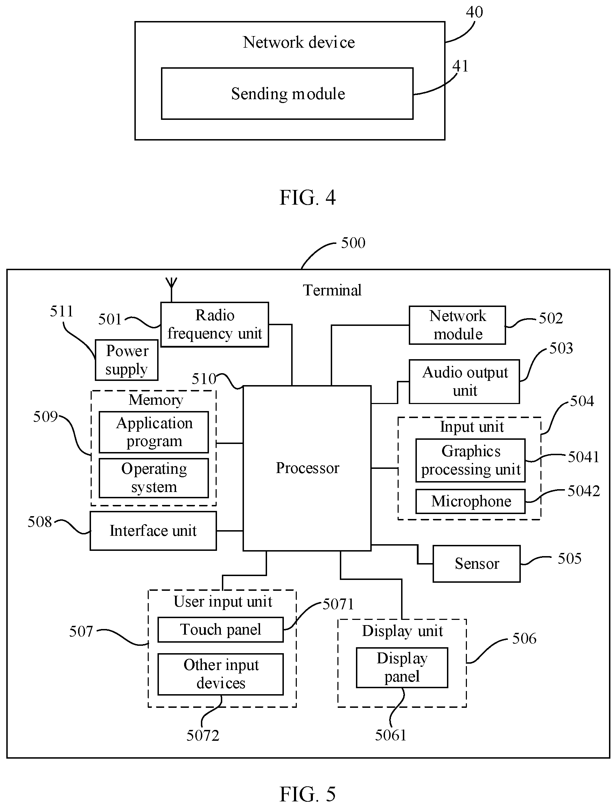

Referring to FIG. 4, FIG. 4 is a schematic structural diagram of a network device according to an embodiment of this disclosure. As shown in FIG. 4, the network device 40 includes:
a sending module 41, configured to send configuration information; where
the configuration information may include at least one of the following:
   a trigger event;
   a trigger event index;
   that a trigger event or a trigger event index is associated with a candidate cell;
   that a trigger event or a trigger event index is associated with a candidate cell identifier;
   that a trigger event is associated with a first message; or
   that a trigger event is associated with a PCell identifier or SpCell identifier in a first message.

Optionally, the candidate cell is the same as a PCell or Spcell indicated by the first message;
or
the candidate cell identifier is the same as the PCell identifier or SpCell identifier in the first message.

Optionally, that a trigger event is associated with a first message includes any one of the following:
a trigger event index being associated with a first-message index;
a trigger event index being associated with the first message; and
the trigger event being associated with a first-message index; or
that a trigger event is associated with a PCell identifier or SpCell identifier in a first message includes any one of the following:
   a trigger event index being associated with the PCell identifier or SpCell identifier in the first message;
   a trigger event index being associated with a PCell or SpCell indicated by the first message; and
   the trigger event being associated with the PCell identifier or SpCell identifier in the first message.

Optionally, that a trigger event is associated with a first message includes any one of the following association manners:
the trigger event being in one-to-one correspondence to the first message;
an RRC message corresponding to the trigger event being configured with an IE of the first message; and
the first message being configured with an IE of an RRC message corresponding to the trigger event.

Optionally, the first message includes any one of the following:
an RRC reconfiguration message, an RRC synchronization reconfiguration message, a handover command, and mobile control information.

It can be understood that the content of the configuration information in this embodiment may be the same as that described in the embodiment shown in FIG. 1. Details are not described herein.

With the foregoing configuration information, the success rate of the handover performed by the terminal can be increased, thereby ensuring a high success rate of the handover and low latency.

An embodiment of the present disclosure further provides a communications device, including a processor, a memory, and a computer program stored in the memory and capable of running on the processor. When the computer program is executed by the processor, the processes of the embodiment shown in FIG. 1 or the processes of the embodiment shown in FIG. 2 are implemented, with the same technical effects achieved. To avoid repetition, details are not described herein again. Optionally, the communications device may be a terminal or a network device.

Referring to FIG. 5, FIG. 5 is a schematic diagram of a hardware structure of a terminal for implementing the embodiments of the present disclosure. The terminal 500 includes but is not limited to components such as a radio frequency unit 501, a network module 502, an audio output unit 503, an input unit 504, a sensor 505, a display unit 506, a user input unit 507, an interface unit 508, a memory 509, a processor 510, and a power supply 511. A person skilled in the art can understand that the structure of the terminal shown in FIG. 5 does not constitute any limitation on the terminal, and the terminal may include more or fewer components than those shown in the diagram, or a combination of some components, or the components disposed differently. In this embodiment of the present disclosure, the terminal includes but is not limited to a mobile phone, a tablet computer, a notebook computer, a palmtop computer, a vehicle-mounted terminal, a wearable device, a pedometer, or the like.

The processor 510 is configured to determine, based on a measurement result of a first cell, whether a trigger condition is met; and hand over to the first cell when the trigger condition is met.

The terminal 500 in this embodiment of the present disclosure can implement the processes of the method embodiment in FIG. 1, with the same beneficial effects achieved. To avoid repetition, details are not described herein again.

It should be understood that in this embodiment of the present disclosure, the radio frequency unit 501 may be configured to receive and transmit signals in an information reception or transmission or call process. Alternatively, after receiving downlink data from a base station, the radio frequency unit 501 transmits the downlink data to the processor 510 for processing, and in addition, transmits uplink data to the base station. Generally, the radio frequency unit 501 includes but is not limited to an antenna, at least one amplifier, a transceiver, a coupler, a low noise amplifier, a duplexer, and the like. In addition, the radio frequency unit 501 may further communicate with a network and other devices via a wireless communications system.

The terminal provides a user with wireless broadband Internet access by using the network module 502, for example, helping the user send or receive an email, browse a web page, access streaming media, and the like.

The audio output unit 503 may convert audio data received by the radio frequency unit 501 or the network module 502 or stored in the memory 509 into an audio signal, and output the audio signal as a sound. In addition, the audio output unit 503 may further provide audio output (for example, a call signal received tone or a message received tone) that is related to a specific function performed by the terminal 500. The audio output unit 503 includes a speaker, a buzzer, a receiver, and the like.

The input unit 504 is configured to receive an audio signal or a video signal. The input unit 504 may include a graphics processing unit (Graphics Processing Unit, GPU) 5041 and a microphone 5042. The graphics processing unit 5041 processes image data of a static picture or a video obtained by an image capture apparatus (for example, a camera) in an image capture mode or a video capture mode. A processed image frame may be displayed on the display unit 506. The image frame processed by the graphics processing unit 5041 may be stored in the memory 509 (or another storage medium) or transmitted by using the radio frequency unit 501 or the network module 502. The microphone 5042 is capable of receiving sounds and processing such sounds into audio data. The processed audio data can be converted into a format output that can be transmitted to a mobile communication base station through the radio frequency unit 501 in a telephone call mode.

The terminal 500 further includes at least one sensor 505, for example, an optical sensor, a motion sensor, and other sensors. Alternatively, the optical sensor includes an ambient light sensor and a proximity sensor. The ambient light sensor may adjust brightness of a display panel 5061 based on intensity of ambient light. When the terminal 500 moves near an ear, the proximity sensor may disable the display panel 5061 and/or backlight. As a motion sensor, an accelerometer sensor may detect magnitudes of accelerations in various directions (typically three axes), and in a stationary state, may detect the magnitude and direction of gravity, and may be applied to terminal posture recognition (for example, switching between a landscape orientation and a portrait orientation, related gaming, and magnetometer posture calibration), vibration recognition related functions (for example, pedometer and tapping), and the like. The sensor 505 may further include a fingerprint sensor, a pressure sensor, an iris sensor, a molecular sensor, a gyroscope, a barometer, a hygrometer, a thermometer, an infrared sensor, and the like. Details are not described herein.

The display unit 506 is configured to display information input by the user or information provided to the user. The display unit 506 may include the display panel 5061. The display panel 5061 may be configured in a form of a liquid crystal display (Liquid Crystal Display, LCD), an organic light-emitting diode (Organic Light-Emitting Diode, OLED), or the like.

The user input unit 507 may be configured to receive input digit or character information, and generate key signal input that is related to user setting and function control of the terminal. Alternatively, the user input unit 507 includes a touch panel 5071 and other input devices 5072. The touch panel 5071, also referred to as a touchscreen, may capture a touch operation performed by a user on or near the touch panel (for example, an operation performed by the user on the touch panel 5071 or near the touch panel 5071 by using a finger or any appropriate object or accessory such as a stylus). The touch panel 5071 may include two parts: a touch detection apparatus and a touch controller. The touch detection apparatus detects a touch orientation of the user, detects a signal carried by the touch operation, and transmits the signal to the touch controller. The touch controller receives touch information from the touch detection apparatus, converts the touch information into contact coordinates, transmits the contact coordinates to the processor 510, receives a command transmitted by the processor 510, and executes the command. In addition, the touch panel 5071 may be implemented in a plurality of forms, for example, as a resistive, capacitive, infrared, or surface acoustic wave touch panel. In addition to the touch panel 5071, the user input unit 507 may further include other input devices 5072. Alternatively, the other input devices 5072 may include but are not limited to a physical keyboard, a function key (such as a volume control key or an on/off key), a trackball, a mouse, and a joystick. Details are not described herein.

Further, the touch panel 5071 may cover the display panel 5061. When detecting a touch operation on or near the touch panel 5071, the touch panel 5071 transmits the touch operation to the processor 510 to determine a type of a touch event. Then, the processor 510 provides a corresponding visual output on the display panel 5061 based on the type of the touch event. Although the touch panel 5071 and the display panel 5061 are used as two separate components to implement input and output functions of the terminal in FIG. 5, the touch panel 5071 and the display panel 5061 may be integrated to implement the input and output functions of the terminal in some embodiments. This is not specifically limited herein.

The interface unit 508 is an interface between an external apparatus and the terminal 500. For example, the external apparatus may include a wired or wireless headphone port, an external power (or battery charger) port, a wired or wireless data port, a memory card port, a port for connecting an apparatus with an identification module, an audio input/output (I/O) port, a video I/O port, or an earphone port. The interface unit 508 may be configured to receive an input (for example, data information or power) from the external apparatus and transmit the received input to one or more elements within the terminal 500, or may be configured to transmit data between the terminal 500 and the external apparatus.

The memory 509 may be configured to store software programs and various data. The memory 509 may mainly include a program storage region and a data storage region. The program storage region may store an operating system, an application program required by at least one function (for example, an audio play function or an image play function), and the like. The data storage region may store data (for example, audio data and a phone book) created based on usage of the mobile phone. In addition, the memory 509 may include a high-speed random access memory, and may further include a non-volatile memory such as a disk storage device, a flash memory device, or another volatile solid-state storage device.

The processor 510 is a control center of the terminal, and is connected to all components of the terminal by using various interfaces and lines. By running or executing software programs and/or modules that are stored in the memory 509 and calling data stored in the memory 509, the processor 510 executes various functions of the terminal and processes data, so as to perform overall monitoring on the terminal. The processor 510 may include one or more processing units. Alternatively, the processor 510 may integrate an application processor and a modem processor. The application processor mainly processes an operating system, a user interface, an application program, and the like. The modem processor mainly processes wireless communication. It can be understood that the modem processor may alternatively be not integrated in the processor 510.

The terminal 500 may further include a power supply 511 (for example, a battery) that supplies power to each component. Alternatively, the power supply 511 may be logically connected to the processor 510 by using a power management system, so as to implement functions such as charging management, discharging management, and power consumption management by using the power management system.

In addition, the terminal 500 may further include some functional modules that are not shown. Details are not described herein.

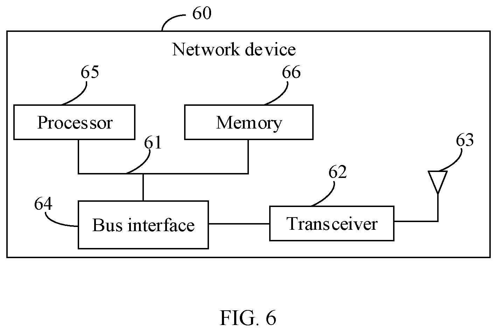

Referring to FIG. 6, FIG. 6 is a schematic diagram of a hardware structure of a network device for implementing the embodiments of the present disclosure. The network device 60 includes but is not limited to a bus 61, a transceiver 62, an antenna 63, a bus interface 64, a processor 65, and a memory 66.

In this embodiment of the present disclosure, the network device 60 further includes a computer program stored in the memory 66 and capable of running on the processor 65. Optionally, when the computer program is executed by the processor 65, the following steps are implemented:
sending configuration information; where
the configuration information includes at least one of the following:
   a trigger event;
   a trigger event index;
   that a trigger event or a trigger event index is associated with a candidate cell;
   that a trigger event or a trigger event index is associated with a candidate cell identifier;
   that a trigger event is associated with a first message; or
   that a trigger event is associated with a PCell identifier or SpCell identifier in a first message.

The transceiver 62 is configured to transmit and receive data under control of the processor 65.

The network device 60 in this embodiment of the present disclosure can implement the processes of the method embodiment in FIG. 2, with the same beneficial effects achieved. To avoid repetition, details are not described herein again.

In FIG. 6, in a bus architecture (represented by the bus 61), the bus 61 may include any quantity of interconnected buses and bridges, and the bus 61 connects various circuits that include one or more processors represented by the processor 65 and a memory represented by the memory 66. The bus 61 may further connect various other circuits, such as a peripheral device, a voltage regulator, and a power management circuit. These are common sense in the art, and therefore are not further described in this specification. The bus interface 64 provides an interface between the bus 61 and the transceiver 62. The transceiver 62 may be one element, or may be a plurality of elements, for example, a plurality of receivers and transmitters, and provides a unit for communicating with various other apparatuses on a transmission medium. Data processed by the processor 65 is transmitted on a wireless medium through the antenna 63. Further, the antenna 63 receives data and transmits the data to the processor 65.

The processor 65 is responsible for managing the bus 61 and general processing, and may further provide various functions, including timing, a peripheral interface, voltage regulation, power management, and other control functions. The memory 66 may be configured to store data for use by the processor 65 when the processor 65 performs an operation.

Optionally, the processor 65 may be a CPU, an ASIC, an FPGA, or a CPLD.

An embodiment of the present disclosure further provides a computer-readable storage medium, where the computer-readable storage medium stores a computer program, and when the computer program is executed by a processor, the processes of the foregoing embodiment shown in FIG. 1 are implemented, or the processes of the foregoing embodiment shown in FIG. 2 are implemented, with the same technical effects achieved. To avoid repetition, details are not described herein again. The computer-readable storage medium may be a read-only memory (Read-Only Memory, ROM), a random access memory (Random Access Memory, RAM), a magnetic disk, an optical disc, or the like.

It should be noted that in this specification, the terms "include" and "comprise", or any of their variants are intended to cover a non-exclusive inclusion, such that a process, a method, an article, or an apparatus that includes a list of elements not only includes those elements but also includes other elements that are not expressly listed, or further includes elements inherent to such a process, method, article, or apparatus. In absence of more constraints, an element preceded by "includes a..." does not preclude the existence of other identical elements in the process, method, article, or apparatus that includes the element.

According to the foregoing description of the implementations, a person skilled in the art may clearly understand that the methods in the foregoing embodiments may be implemented by using software in combination with a necessary common hardware platform, and certainly may alternatively be implemented by using hardware. However, in most cases, the former is a preferred implementation. Based on such an understanding, the technical solutions of the present disclosure essentially, or the part contributing to the prior art may be implemented in a form of a software product. The software product is stored in a storage medium (for example, ROM/RAM, a magnetic disk, or an optical disc), and includes several instructions for instructing a terminal (which may be a mobile phone, a computer, a server, an air conditioner, a network device, or the like) to perform the method described in the embodiments of the present disclosure.

The embodiments of the present disclosure are described above with reference to the accompanying drawings, but the present disclosure is not limited to the foregoing implementations. The foregoing embodiments are only illustrative rather than restrictive.

## Claims

1. A conditional handover method performed by a terminal, comprising:
receiving configuration information; wherein the configuration information comprises at least one of the following: a trigger event; an index of a trigger event; that a trigger event is associated with a first message; or that that a trigger event is associated with a PCell identifier or SpCell identifier in a first message; and
determining, based on a measurement result of a first cell, whether a trigger condition is met (101); and
handing over to the first cell in a case that the trigger condition is met (102), wherein the first cell is associated with the trigger condition, the association manner comprises the first cell being in one-to-one correspondence to the trigger condition,
wherein
the first cell is a primary cell, PCell, associated with the trigger condition; or
the first cell is a special cell, SpCell, associated with the trigger condition.

2. The method according to claim 1, wherein in a case that the trigger condition is met, the method further comprises:
skipping performing measurement reporting.

3. The method according to claim 1, further comprising:
in a case that the trigger condition is not met, performing at least one of the following:
skipping handing over to the first cell; or
performing measurement reporting, or skipping performing measurement reporting.

4. The method according to claim 1 wherein a candidate cell is the same as a PCell or Spcell indicated by the first message; or
the candidate cell identifier is the same as the PCell identifier or SpCell identifier in the first message;
wherein that a trigger event is associated with a first message comprises any one of the following:
an index of a trigger event being associated with a first-message index;
an index of a trigger event being associated with the first message; or
the trigger event being associated with a first-message index; or
that a trigger event is associated with a PCell identifier or SpCell identifier in a first message comprises any one of the following:
an index of a trigger event being associated with the PCell identifier or SpCell identifier in the first message;
an index of a trigger event being associated with a PCell or SpCell indicated by the first message; and
the trigger event being associated with the PCell identifier or SpCell identifier in the first message;
wherein that a trigger event is associated with a first message comprises any one of the following association manners:
the trigger event being in one-to-one correspondence to the first message;
a radio resource control RRC message corresponding to the trigger event being configured with an information element IE of the first message; or
the first message being configured with an IE of an RRC message corresponding to the trigger event.

5. The method according to claim 4, wherein the first message comprises any one of the following:
an RRC reconfiguration message, an RRC synchronization reconfiguration message, a handover command, and mobile control information.

6. A conditional handover configuration method performed by a network device, comprising:
sending configuration information (201); wherein
the configuration information comprises at least one of the following:
a trigger event;
an index of a trigger event;
that a trigger event is associated with a first message; or
that a trigger event is associated with a PCell identifier or SpCell identifier in a first message,
wherein the configuration information is for a terminal determining, based on a measurement result of a first cell, whether a trigger condition is met; and handing over to the first cell in a case that the trigger condition is met, wherein the first cell is associated with the trigger condition, the association manner comprises the first cell being in one-to-one correspondence to the trigger condition, wherein the first cell is a primary cell, PCell, associated with the trigger condition; or the first cell is a special cell, SpCell, associated with the trigger condition.

7. The method according to claim 6, wherein the candidate cell is the same as a PCell or Spcell indicated by the first message; or
the candidate cell identifier is the same as the PCell identifier or SpCell identifier in the first message.

8. The method according to claim 6, wherein that a trigger event is associated with a first message comprises any one of the following:
an index of a trigger event being associated with a first-message index;
an index of a trigger event being associated with the first message; or
the trigger event being associated with a first-message index; or
that a trigger event is associated with a PCell identifier or SpCell identifier in a first message comprises any one of the following:
an index of a trigger event being associated with the PCell identifier or SpCell identifier in the first message;
an index of a trigger event being associated with a PCell or SpCell indicated by the first message; or
the trigger event being associated with the PCell identifier or SpCell identifier in the first message.

9. The method according to claim 6, wherein that a trigger event is associated with a first message comprises any one of the following association manners:
the trigger event being in one-to-one correspondence to the first message;
an RRC message corresponding to the trigger event being configured with an IE of the first message; and
the first message being configured with an IE of an RRC message corresponding to the trigger event.

10. The method according to any one of claims 6 to 9, wherein the first message comprises any one of the following:
an RRC reconfiguration message, an RRC synchronization reconfiguration message, a handover command, and mobile control information.

11. A terminal (30, 500), comprising
a determining module (31), configured to determine, based on a measurement result of a first cell, whether a trigger condition is met; and
a processing module (32), configured to hand over to the first cell in a case that the trigger condition is met,
wherein the first cell is associated with the trigger condition, the association manner comprises the first cell being in one-to-one correspondence to the trigger condition, wherein the first cell is a primary cell, PCell, associated with the trigger condition; or the first cell is a special cell, SpCell, associated with the trigger condition.

12. A network device (40, 60), comprising
a sending module (41), configured to send configuration information; wherein
the configuration information comprises at least one of the following:
a trigger event;
an index of a trigger event;
that a trigger event or an index of a trigger event is associated with a candidate cell;
that a trigger event or an index of a trigger event is associated with a candidate cell identifier;
that a trigger event is associated with a first message; or
that a trigger event is associated with a PCell identifier or SpCell identifier in a first message,
wherein the configuration information is for a terminal determining, based on a measurement result of a first cell, whether a trigger condition is met; and handing over to the first cell in a case that the trigger condition is met, wherein the first cell is associated with the trigger condition, the association manner comprises the first cell being in one-to-one correspondence to the trigger condition, wherein the first cell is a primary cell, PCell, associated with the trigger condition; or the first cell is a special cell, SpCell, associated with the trigger condition.

## Patentansprüche

1. Konditionales Übergabeverfahren, ausgeführt von einem Endgerät, umfassend:
Empfangen von Konfigurationsinformationen; wobei die Konfigurationsinformationen mindestens eine von den folgenden umfassen: ein Auslöseereignis; einen Index eines Auslöseereignisses; dass ein Auslöseereignis einer ersten Nachricht zugeordnet ist; oder dass ein Auslöseereignis einer PCell-Kennung oder einer SpCell-Kennung in einer ersten Nachricht zugeordnet ist; und
Feststellen, auf Grundlage eines Messergebnisses einer ersten Zelle, ob eine Auslösebedingung erfüllt ist (101); und
in einem Fall, in dem die Auslösebedingung erfüllt ist (102), Übergeben an die erste Zelle, wobei die erste Zelle der Auslösebedingung zugeordnet ist, wobei die Art der Zuordnung umfasst, dass sich die erste Zelle in einer Eins-zu-eins-Entsprechung zur Auslösebedingung befindet, wobei
die erste Zelle eine der Auslösebedingung zugeordnete Primärzelle, PCell, ist; oder
die erste Zelle eine der Auslösebedingung zugeordnete Spezialzelle, SpCell, ist.

2. Verfahren nach Anspruch 1, wobei das Verfahren in einem Fall, in dem die Auslösebedingung erfüllt ist, ferner umfasst:
Überspringen des Durchführens der Messberichterstattung.

3. Verfahren nach Anspruch 1, ferner umfassend:
in einem Fall, in dem die Auslösebedingung nicht erfüllt ist, Durchführen mindestens einer von den folgenden Aktionen:
Überspringen der Übergabe an die erste Zelle; oder
Durchführen von Messberichterstattung oder Überspringen des Durchführens von Messberichterstattung.

4. Verfahren nach Anspruch 1, wobei eine Kandidatenzelle die gleiche wie eine durch die erste Nachricht angegebene PCell oder SpCell ist; oder
die Kandidatenzellenkennung die gleiche wie die PCell-Kennung oder SpCell-Kennung in der ersten Nachricht ist;
wobei die Tatsache, dass ein Auslöseereignis einer ersten Nachricht zugeordnet ist, eine beliebige von den folgenden Informationen umfasst:
dass ein Index eines Auslöseereignisses einem Index einer ersten Nachricht zugeordnet ist;
dass ein Index eines Auslöseereignisses der ersten Nachricht zugeordnet ist; oder
dass das Auslöseereignis einem Index einer ersten Nachricht zugeordnet ist; oder
dass ein Auslöseereignis einer PCell-Kennung oder SpCell-Kennung in einer ersten Nachricht zugeordnet ist, eine beliebige von den folgenden Informationen umfasst:
dass ein Index eines Auslöseereignisses der PCell-Kennung oder SpCell-Kennung in der ersten Nachricht zugeordnet ist;
dass ein Index eines Auslöseereignisses einer durch die erste Nachricht angegebenen PCell oder SpCell zugeordnet ist; und
dass das Auslöseereignis der PCell-Kennung oder SpCell-Kennung in der ersten Nachricht zugeordnet ist;
wobei die Tatsache, dass ein Auslöseereignis einer ersten Nachricht zugeordnet ist, eine beliebige von den folgenden Arten der Zuordnung umfasst:
das Auslöseereignis ist in einer Eins-zu-eins-Entsprechung mit der ersten Nachricht;
eine dem Auslöseereignis entsprechende Funkressourcensteuerungsnachricht, RRC-Nachricht, ist mit einem Informationselement, IE, der ersten Nachricht konfiguriert; oder
die erste Nachricht ist mit einem IE einer dem Auslöseereignis entsprechenden RRC-Nachricht konfiguriert.

5. Verfahren nach Anspruch 4, wobei die erste Nachricht eine beliebige von den folgenden umfasst:
eine RRC-Rekonfigurationsnachricht, eine RRC-Synchronisationsrekonfigurationsnachricht, einen Übergabebefehl und Informationen zur mobilen Steuerung.

6. Konditionales Übergabekonfigurationsverfahren, ausgeführt von einem Netzwerkgerät, umfassend:
Senden von Konfigurationsinformationen (201); wobei
die Konfigurationsinformationen mindestens eine von den folgenden umfassen:
ein Auslöseereignis;
einen Index eines Auslöseereignisses;
dass ein Auslöseereignis einer ersten Nachricht zugeordnet ist; oder
dass ein Auslöseereignis einer PCell-Kennung oder SpCell-Kennung in einer ersten Nachricht zugeordnet ist,
wobei die Konfigurationsinformationen für ein Endgerät sind, das auf Grundlage eines Messergebnisses einer ersten Zelle feststellt, ob eine Auslösebedingung erfüllt ist; und in einem Fall, in dem die Auslösebedingung erfüllt ist, Übergeben an die erste Zelle, wobei die erste Zelle der Auslösebedingung zugeordnet ist und die Art der Zuordnung umfasst, dass die erste Zelle in einer Eins-zu-eins-Entsprechung mit der Auslösebedingung ist, wobei die erste Zelle eine der Auslösebedingung zugeordnete Primärzelle, PCell, ist; oder die erste Zelle eine der Auslösebedingung zugeordnete Spezialzelle, SpCell, ist.

7. Verfahren nach Anspruch 6, wobei die Kandidatenzelle die gleiche wie eine durch die erste Nachricht angegebene PCell oder SpCell ist; oder
die Kandidatenzellenkennung die gleiche wie die PCell-Kennung oder SpCell-Kennung in der ersten Nachricht ist.

8. Verfahren nach Anspruch 6, wobei die Tatsache, dass ein Auslöseereignis einer ersten Nachricht zugeordnet ist, eine beliebige von den folgenden Informationen umfasst:
dass ein Index eines Auslöseereignisses einem Index einer ersten Nachricht zugeordnet ist;
dass ein Index eines Auslöseereignisses der ersten Nachricht zugeordnet ist; oder
dass das Auslöseereignis einem Index einer ersten Nachricht zugeordnet ist; oder
dass ein Auslöseereignis einer PCell-Kennung oder SpCell-Kennung in einer ersten Nachricht zugeordnet ist, eine beliebige von den folgenden Informationen umfasst:
dass ein Index eines Auslöseereignisses der PCell-Kennung oder SpCell-Kennung in der ersten Nachricht zugeordnet ist;
dass ein Index eines Auslöseereignisses einer durch die erste Nachricht angegebenen PCell oder SpCell zugeordnet ist; oder
dass das Auslöseereignis der PCell-Kennung oder SpCell-Kennung in der ersten Nachricht zugeordnet ist.

9. Verfahren nach Anspruch 6, wobei die Tatsache, dass ein Auslöseereignis einer ersten Nachricht zugeordnet ist, eine beliebige von den folgenden Arten der Zuordnung umfasst:
das Auslöseereignis ist in einer Eins-zu-eins-Entsprechung mit der ersten Nachricht;
eine dem Auslöseereignis entsprechende RRC-Nachricht ist mit einem IE der ersten Nachricht konfiguriert; und
die erste Nachricht ist mit einem IE einer dem Auslöseereignis entsprechenden RRC-Nachricht konfiguriert.

10. Verfahren nach einem der Ansprüche 6 bis 9, wobei die erste Nachricht eine beliebige von den folgenden umfasst:
eine RRC-Rekonfigurationsnachricht, eine RRC-Synchronisationsrekonfigurationsnachricht, einen Übergabebefehl und Informationen zur mobilen Steuerung.

11. Endgerät (30, 500), umfassend:
ein Feststellungsmodul (31), dazu konfiguriert, auf Grundlage eines Messergebnisses einer ersten Zelle festzustellen, ob eine Auslösebedingung erfüllt ist; und
ein Verarbeitungsmodul (32), dazu konfiguriert, in einem Fall, in dem die Auslösebedingung erfüllt ist, an die erste Zelle zu übergeben,
wobei die erste Zelle der Auslösebedingung zugeordnet ist, die Art der Zuordnung umfasst, dass die erste Zelle in einer Eins-zu-eins-Entsprechung mit der Auslösebedingung ist, wobei die erste Zelle eine der Auslösebedingung zugeordnete Primärzelle, PCell, ist; oder die erste Zelle eine der Auslösebedingung zugeordnete Spezialzelle, SpCell, ist.

12. Netzwerkvorrichtung (40, 60), umfassend:
ein Sendemodul (41), dazu konfiguriert, Konfigurationsinformationen zu senden; wobei
die Konfigurationsinformationen mindestens eine von den folgenden umfassen:
ein Auslöseereignis;
einen Index eines Auslöseereignisses;
dass ein Auslöseereignis oder ein Index eines Auslöseereignisses einer Kandidatenzelle zugeordnet ist;
dass ein Auslöseereignis oder ein Index eines Auslöseereignisses einer Kandidatenzellenkennung zugeordnet ist;
dass ein Auslöseereignis einer ersten Nachricht zugeordnet ist; oder
dass ein Auslöseereignis einer PCell-Kennung oder SpCell-Kennung in einer ersten Nachricht zugeordnet ist,
wobei die Konfigurationsinformationen für ein Endgerät sind, das auf Grundlage eines Messergebnisses einer ersten Zelle feststellt, ob eine Auslösebedingung erfüllt ist; und in einem Fall, in dem die Auslösebedingung erfüllt ist, Übergeben an die erste Zelle, wobei die erste Zelle der Auslösebedingung zugeordnet ist und die Art der Zuordnung umfasst, dass die erste Zelle in einer Eins-zu-eins-Entsprechung mit der Auslösebedingung ist, wobei die erste Zelle eine der Auslösebedingung zugeordnete Primärzelle, PCell, ist; oder die erste Zelle eine der Auslösebedingung zugeordnete Spezialzelle, SpCell, ist.

## Revendications

1. Procédé de transfert conditionnel exécuté par un terminal, comprenant les opérations suivantes :
recevoir des informations de configuration ; les informations de configuration comprennent au moins l'un des éléments suivants : un événement déclencheur ; un indice d'un événement déclencheur ; le fait qu'un événement déclencheur est associé à un premier message; ou le fait qu'un événement déclencheur est associé à un identificateur PCell ou à un identificateur SpCell dans un premier message ; et
déterminer, sur la base d'un résultat de mesure d'une première cellule, si une condition de déclenchement est remplie (101) ; et
transférer à la première cellule au cas où la condition de déclenchement est remplie (102), la première cellule étant associée à la condition de déclenchement, le mode d'association comprenant la correspondance univoque entre la première cellule et la condition de déclenchement, dans lequel
la première cellule est une cellule primaire, PCell, associée à la condition de déclenchement ; ou bien
la première cellule est une cellule spéciale, SpCell, associée à la condition de déclenchement.

2. Procédé selon la revendication 1, dans lequel, si la condition de déclenchement est remplie, le procédé consiste en outre à
omettre l'établissement d'un rapport de mesure.

3. Procédé selon la revendication 1, comprenant en outre :
au cas où la condition de déclenchement n'est pas remplie, effectuer au moins l'une des opérations suivantes :
omettre le transfert vers la première cellule ; ou bien
effectuer un rapport de mesure, ou omettre d'effectuer un rapport de mesure.

4. Procédé selon la revendication 1, dans lequel une cellule candidate est la même qu'une PCell ou Spcell indiquée par le premier message ; ou bien
l'identifiant de la cellule candidate est identique à l'identifiant de la cellule PC ou à l'identifiant de la cellule Sp dans le premier message ;
dans lequel le fait qu'un événement déclencheur soit associé à un premier message comprend l'un des éléments suivants :
un index d'un événement déclencheur associé à un index de premier message ;
l'index d'un événement déclencheur est associé au premier message ; ou bien
l'événement déclencheur est associé à un index de premier message ; ou bien
qu'un événement déclencheur est associé à un identificateur PCell ou à un identificateur SpCell dans un premier message comprend l'un des éléments suivants :
un index d'un événement déclencheur associé à l'identificateur PCell ou à l'identificateur SpCell dans le premier message ;
un index d'un événement déclencheur associé à un PCell ou SpCell indiqué par le premier message ; et
l'événement déclencheur est associé à l'identifiant PCell ou SpCell dans le premier message ;
dans lequel l'association d'un événement déclencheur à un premier message comprend l'un des procédés d'association suivantes :
l'événement déclencheur est en correspondance biunivoque avec le premier message ;
un message RRC de contrôle des ressources radio correspondant à l'événement déclencheur est configuré avec un élément d'information IE du premier message ; ou bien
le premier message est configuré avec un IE d'un message RRC correspondant à l'événement déclencheur.

5. Procédé selon la revendication 4, dans lequel le premier message comprend l'un des éléments suivants :
un message de reconfiguration RRC, un message de reconfiguration de la synchronisation RRC, une commande de transfert et des informations de contrôle du mobile.

6. Procédé de configuration de transfert conditionnel exécuté par un dispositif de réseau, comprenant :
l'envoi d'informations de configuration (201) ; dans lequel
les informations de configuration comprennent au moins l'un des éléments suivants
un événement déclencheur ;
un index d'un événement déclencheur ;
un événement déclencheur est associé à un premier message ; ou bien
un événement déclencheur est associé à un identifiant PCell ou à un identifiant SpCell dans un premier message,
dans lequel les informations de configuration sont destinées à un terminal déterminant, sur la base d'un résultat de mesure d'une première cellule, si une condition de déclenchement est remplie ; et remettre à la première cellule au cas où la condition de déclenchement est remplie, dans lequel la première cellule est associée à la condition de déclenchement, la manière d'association comprend la première cellule étant en correspondance univoque avec la condition de déclenchement, dans lequel la première cellule est une cellule primaire, PCell, associée à la condition de déclenchement ; ou la première cellule est une cellule spéciale, SpCell, associée à la condition de déclenchement.

7. Procédé selon la revendication 6, dans lequel la cellule candidate est la même qu'une PCell ou Spcell indiquée par le premier message ; ou bien
l'identificateur de la cellule candidate est le même que l'identificateur de la cellule PC ou l'identificateur de la cellule Sp dans le premier message.

8. Procédé selon la revendication 6, dans lequel le fait qu'un événement déclencheur soit associé à un premier message comprend l'un des éléments suivants :
un index d'un événement déclencheur associé à un index de premier message ;
un index d'un événement déclencheur associé au premier message ; ou bien
l'événement déclencheur est associé à un index de premier message ; ou bien
qu'un événement déclencheur est associé à un identificateur PCell ou à un identificateur SpCell dans un premier message comprend l'un des éléments suivants :
un index d'un événement déclencheur associé à l'identificateur PCell ou à l'identificateur SpCell dans le premier message ;
un index d'un événement déclencheur associé à un PCell ou SpCell indiqué par le premier message ; ou bien
l'événement déclencheur est associé à l'identifiant PCell ou SpCell dans le premier message.

9. Procédé selon la revendication 6, dans lequel l'association d'un événement déclencheur à un premier message comprend l'une des manières d'association suivantes :
l'événement déclencheur est en correspondance biunivoque avec le premier message ;
un message RRC correspondant à l'événement déclencheur est configuré avec un IE du premier message ; et
le premier message est configuré avec un IE d'un message RRC correspondant à l'événement déclencheur.

10. Procédé selon l'une des revendications 6 à 9, dans lequel le premier message comprend l'un des éléments suivants :
un message de reconfiguration RRC, un message de reconfiguration de la synchronisation RRC, une commande de transfert et des informations de contrôle du mobile.

11. Terminal (30, 500) comprenant
un module de détermination (31), configuré pour déterminer, sur la base d'un résultat de mesure d'une première cellule, si une condition de déclenchement est remplie ; et
un module de traitement (32), configuré pour passer le relais à la première cellule si la condition de déclenchement est remplie,
la première cellule est associée à la condition de déclenchement, la manière dont l'association comprend la première cellule en correspondance un à un avec la condition de déclenchement, la première cellule étant une cellule primaire, PCell, associée à la condition de déclenchement, ou la première cellule étant une cellule spéciale, SpCell, associée à la condition de déclenchement.

12. Dispositif de réseau (40, 60) comprenant
un module d'envoi (41), configuré pour envoyer des informations de configuration ; dans lequel
les informations de configuration comprennent au moins l'un des éléments suivants
un événement déclencheur ;
un index d'un événement déclencheur ;
un événement déclencheur ou un index d'un événement déclencheur est associé à une cellule candidate ;
un événement déclencheur ou un index d'un événement déclencheur est associé à un identifiant de cellule candidate ;
un événement déclencheur est associé à un premier message ; ou bien
un événement déclencheur est associé à un identifiant PCell ou SpCell dans un premier message,
dans lequel les informations de configuration sont destinées à un terminal déterminant, sur la base d'un résultat de mesure d'une première cellule, si une condition de déclenchement est remplie ; et transmettre à la première cellule au cas où la condition de déclenchement est remplie, dans lequel la première cellule est associée à la condition de déclenchement, la manière d'association comprend la première cellule étant en correspondance un-à-un avec la condition de déclenchement, dans lequel la première cellule est une cellule primaire, PCell, associée à la condition de déclenchement ; ou la première cellule est une cellule spéciale, SpCell, associée à la condition de déclenchement.
